# EUROPÄISCHE PATENTANMELDUNG

(11) **EP 0 669 093 A1**
(43) Veröffentlichungstag der Anmeldung: **30.08.1995**
(21) Anmeldenummer: 95101818.3
(22) Anmeldetag: 10.02.1995
(51) Int. Cl.: A47C 1/027

(54) **Ruckhemmung**

(30) Priorität: 24.02.1994 DE 4405992
(71) Anmelder: SIFA Sitzfabrik GmbH, D-92237 Sulzbach-Rosenberg (DE)
(72) Erfinder: Neumüller, Konrad, verstorben (DE)
(74) Vertreter: Merten, Fritz

(57) **Zusammenfassung**

Ruckhemmung, insbesondere für Bürostühle, für den Einsatz zwischen zwei gegeneinander um eine Achse klappbare Teile wie Rückenlehne und Sitzplatte, bestehend aus
- einem an dem einen Teil befestigten rohrförmigen Gehäuse, welches an beiden Enden mit nach innen gerichteten Anschlägen oder mit Verschlußstopfen versehen ist,
- einer in dem Gehäuse drehbar gelagerten Mutter,
- sowie einer mit ihrem Kopf an dem anderen Teil befestigten, durch das Gehäuse und die Verschlußstopfen, bzw. Anschläge geführten und selbsthemmungsfrei in der Mutter drehenden Spindel,
   wobei die Mutter ein Formteil ist, welches in kraftschlüssigen Eingriff mit einem Anschlagbereich an der Innenwand des Gehäuses bringbar ist, wobei das Formteil (3) ein zylindrischer Körper und der Anschlagbereich wenigstens ein an der Innenwand des Gehäuses (2) angeordneter Vorsprung ist, wobei das Formteil (3) und der Vorsprung auf den einander gegenüberliegenden Flächen miteinander in Eingriff bringbare Rastelemente aufweisen,
   und wobei zwischen dem Formteil (3) und dem dem Kopf (6) der Spindel (4) zugewandten Anschlag, bzw. Verschlußstopfen (7) eine Druckfeder (9) angeordnet ist und der Kraftschluß nach Überwindung wenigstens eines Teils der Federkraft erfolgt.

## Beschreibung

Die Erfindung betrifft eine Ruckhemmung, insbesondere für Bürostühle, mit den Merkmalen des Anspruchs 1.

Eine Ruckhemmung zum Verhindern des Zurückschlagens von Rückenlehnen bei Bürostühlen, bestehend aus
- einem an dem einen Teil befestigten rohrförmigen Gehäuse, welches an beiden Enden mit nach innen gerichteten Anschlägen oder mit Verschlußstopfen versehen ist,
- einer in dem Gehäuse drehbar gelagerten Mutter,
- sowie einer mit ihrem Kopf an dem anderen Teil befestigten, durch das Gehäuse und die Verschlußstopfen, bzw. Anschläge geführten und selbsthemmungsfrei in der Mutter drehenden Spindel,

wobei die Mutter ein konisches Formteil ist, welches in kraftschlüssigen Eingriff mit einem konischen Anschlagbereich an der Innenwand des Gehäuses bringbar ist, ist aus der DE-A-39 07 251 bekannt.

Aufgabe der vorliegenden Erfindung ist es, eine gattungsgemäße Ruckhemmung mit exakt festlegbarem Hemmverhalten und auch über einen längeren Zeitraum sicherer Funktion zu schaffen. Diese Aufgabe wird mit den im kennzeichnenden Teil des Anspruchs 1 genannten Merkmalen gelöst. Fortbildungen und vorteilhafte Ausführungen der Erfindung sind in den weiteren Ansprüchen umfaßt.

Erfindungsgemäß ist bei einer solchen Ruckhemmung das Formteil ein zylindrischer Körper und der Anschlagbereich wenigstens ein an der Innenwand des Gehäuses angeordneter Vorsprung. Das Formteil und der Vorsprung weisen auf den einander gegenüberliegenden Flächen miteinander in Eingriff bringbare Rastelemente auf und zwischen dem Formteil und dem dem Kopf der Spindel zugewandten Anschlag, bzw. Verschlußstopfen ist eine Druckfeder angeordnet, wobei der Kraftschluß nach Überwindung wenigstens eines Teils der Federkraft erfolgt.

Vorteilhafterweise ist der Anschlag ein umlaufender Steg und die Rastelemente weisen die Form einer Schrägverzahnung auf.

Vorteilhafterweise ist weiter zwischen dem Formteil und der Druckfeder ein an dem Anschlag vorbeigeführtes Zwischenstück angeordnet, wobei das Zwischenstück einstückig mit dem Formteil ausgeführt sein kann.

Zur Funktionsoptimierung sind zwischen dem Formteil und dem dem Kopf der Spindel entgegenliegenden Anschlag oder Verschlußstopfen, sowie zwischen dem Zwischenstück und der Druckfeder jeweils zwischen Beilagscheiben angeordnete Kugellager eingelegt.

Die Ruckhemmung wird vorteilhafterweise so ausgeführt, daß das Gehäuse mit den Anschlägen,
bzw. Verschlußstopfen und die Druckfeder so dimensioniert sind, daß die weiteren Elemente, nämlich das Formteil, das Zwischenstück und die Kugellager mit den Beilagscheiben in der Ruhestellung aneinanderliegen.

Im folgenden wird die Erfindung anhand von Zeichnungen beispielhaft näher beschrieben. Dabei zeigen:
Fig. 1 eine Ruckhemmung im Schnitt;
Fig. 2 die Ruckhemmung gemäß Fig. 1 in Explosionsdarstellung;
Fig. 3 einen Bürostuhl mit eingebauter Ruckhemmung.

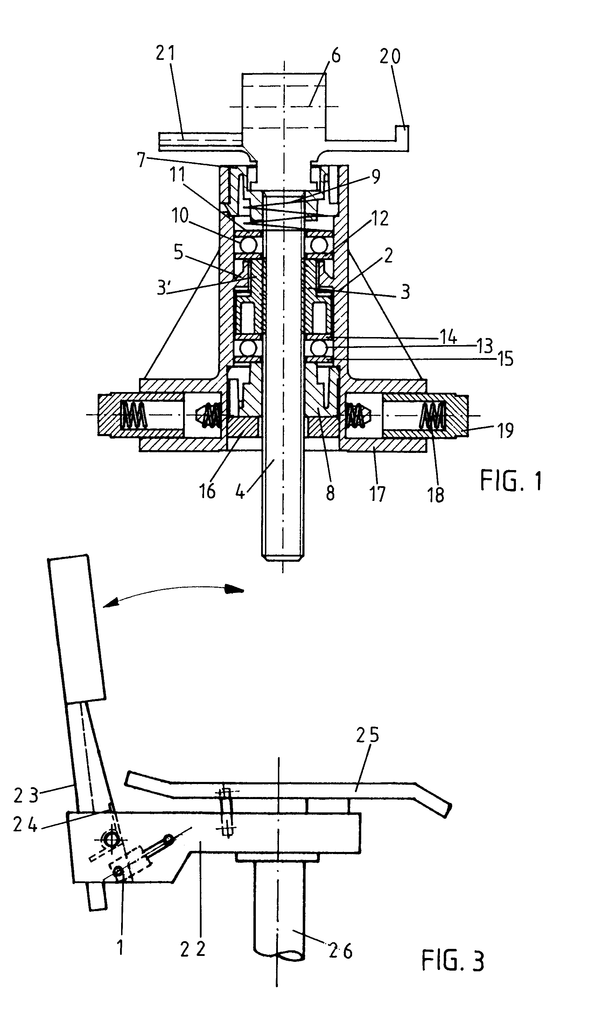

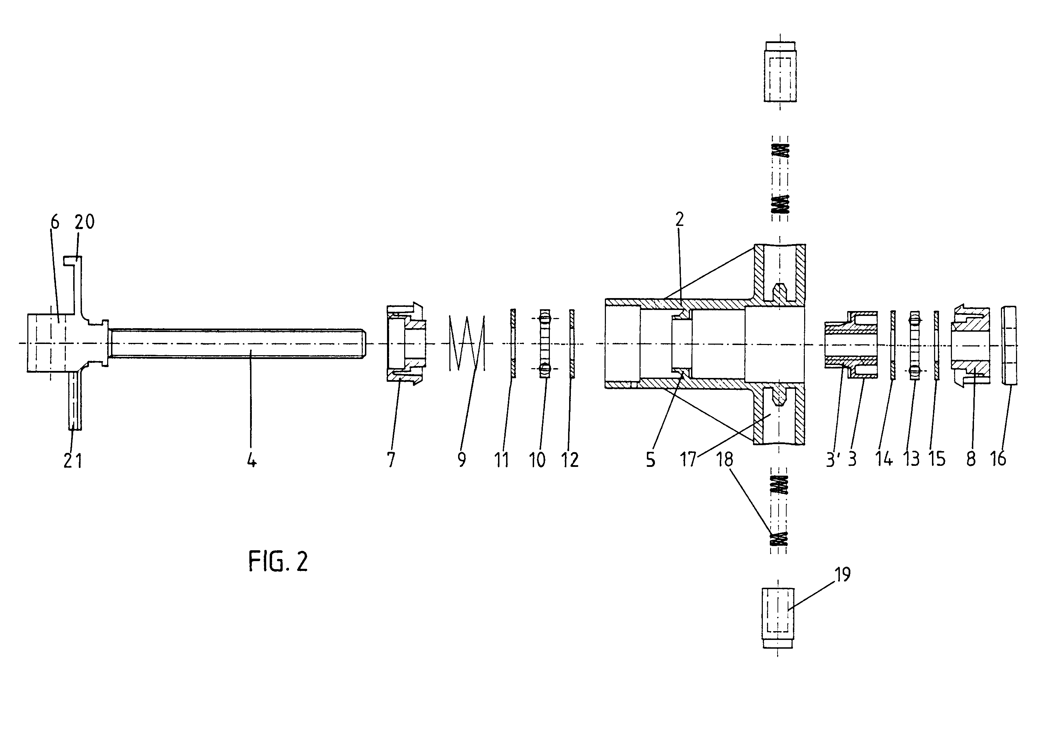

Die in Fig. 1 und 2 dargestellte Ruckhemmung 1 besteht aus einem rohrförmigen Gehäuse (2), welches beidseitig mit Verschlußstopfen 7, 8 verschlossen ist. Die Verschlußstopfen 7, 8 besitzen zentrale Bohrungen, durch welche eine Spindel 4 geführt ist. Auf der Spindel 4 ist im Gehäuse 2 selbsthemmungsfrei eine als zylindrisches Formteil 3 ausgeführte Mutter gelagert. Das Gehäuse 2 weist etwa in seiner Mitte innen einen umlaufenden Steg 5 auf. Dieser Steg 5 ist mit Rastelementen, beispielsweise in Form einer Schrägverzahnung versehen, welche mit entsprechenden, auf dem Formteil 3 umlaufenden gegenüberliegenden Rastelementen in Eingriff bringbar sind. Der Eingriff der Rastelemente erfolgt durch die Überwindung der Kraft einer zwischen dem Verschlußstopfen 7, der von dem Formteil 3 aus gesehen jenseits des Stegs 5 angeordnet ist und dem Formteil 3 wirkenden Feder 9.

Diese Feder 9 ist so ausgelegt, daß das Formteil 3 bei Überschreitung einer bestimmten auf die Spindel wirkenden Kraft durch ein zurückklappendes Element, z. B. eine Rückenlehne, welches mit dem Spindelkopf 6 verbunden ist, ein vorgesehenes Federspiel überwindet und die Bewegung zum Stillstand kommt. Wird nur geringe Kraft auf die Spindel 4 und das Formteil 3 ausgeübt, so wird die Feder 9 nicht komprimiert und die Bewegung nicht gehemmt. Das Formteil 3 ist hier so ausgeführt, daß es mit einem Zwischenstück 3' schmaleren Durchmessers durch den Steg 5 greift. Zwischen diesem Zwischenstück 3' und dem dem Spindelkopf zugewandten Verschlußstopfen 7 und dem Formteil 3 und dem anderen Verschlußstopfen 8 des Gehäuses 2 sind jeweils Pakete aus zwei Beilagscheiben 11, 12 und 14, 15, die Kugellager 10, 13 umschließen angeordnet. An dem dem Spindelkopf 6 abgewandten Ende des Gehäuses 2 ist hinter dem Verschlußstopfen 8 noch eine Einpreßscheibe 16 angeordnet. Der Spindelkopf 6 weist zwei Halterungen 20, 21 für die Verbindung mit einem Sitzträger auf. An dem anderen Ende ist das Gehäuse 2 seitlich mit zwei Rohrstutzen 17 versehen, in denen auf Federn 18 gelagerte Schnappelemente 19 zur Verbindung mit einer Rückenlehne angeordnet sind. Die Ruckhemmung kann sowohl so eingebaut werden, daß sie auf Zugkraft reagiert, wie hier dargestellt, durch ein Umdrehen der Spindel kann sie jedoch auch auf Druckkraft ansprechen.

Ein beispielsweiser Einbau der Ruckhemmung 1 zeigt Fig. 3. Hier ist ein Bürodrehstuhl mit Säule 6, Sitzträger 2, Sitzplatte 5 und Rückenlehne 3 dargestellt. Zwischen der Rückenlehne 3 und dem Sitzträger 2 wirkt eine Feder 4, die bestrebt ist, die Rückenlehne 3 nach vorne zu klappen. Die Ruckhemmung 1 ist unterhalb eines Drehpunkts der Rückenlehne 3 befestigt, so daß bei der Klappbewegung die Spindel ein Stück aus dem Gehäuse gezogen wird.

Erfolgt dies bei abgebremster Bewegung der Rükkenlehne, z.B. durch die auf dem Stuhl sitzende Person, so tritt die Hemmwirkung nicht ein. Wird die Rückenlehne jedoch losgelassen, so ist die Federkraft der Rückenlehne so groß, daß die Bewegung gestoppt wird.

## Patentansprüche

1. Ruckhemmung, insbesondere für Bürostühle, für den Einsatz zwischen zwei gegeneinander um eine Achse klappbare Teile wie Rückenlehne und Sitzplatte, bestehend aus
- einem an dem einen Teil befestigten rohrförmigen Gehäuse, welches an beiden Enden mit nach innen gerichteten Anschlägen oder mit Verschlußstopfen versehen ist,
- einer in dem Gehäuse drehbar gelagerten Mutter,
- sowie einer mit ihrem Kopf an dem anderen Teil befestigten, durch das Gehäuse und die Verschlußstopfen, bzw. Anschläge geführten und selbsthemmungsfrei in der Mutter drehenden Spindel,
wobei die Mutter ein Formteil ist, welches in kraftschlüssigen Eingriff mit einem Anschlagbereich an der Innenwand des Gehäuses bringbar ist,
dadurch gekennzeichnet,
daß das Formteil (3) ein zylindrischer Körper ist,
daß der Anschlagbereich wenigstens ein an der Innenwand des Gehäuses (2) angeordneter Vorsprung ist,
daß das Formteil und der Vorsprung auf den einander gegenüberliegenden Flächen miteinander in Eingriff bringbare Rastelemente aufweisen,
und daß zwischen dem Formteil (3) und dem dem Kopf (6) der Spindel (4) zugewandten Anschlag, bzw. Verschlußstopfen (7) eine Druckfeder (9) angeordnet ist und der Kraftschluß nach Überwindung wenigstens eines Teils der Federkraft erfolgt.

2. Ruckhemmung nach Anspruch 1,
dadurch gekennzeichnet,
daß der Anschlag ein umlaufender Steg (5) ist.

3. Ruckhemmung nach Anspruch 2,
dadurch gekennzeichnet,
daß die Rastelemente die Form einer Schrägverzahnung aufweisen.

4. Ruckhemmung nach Anspruch 1,
dadurch gekennzeichnet,
daß zwischen dem Formteil (3) und der Druckfeder (9) ein an dem Anschlag vorbeigeführtes Zwischenstück (3') angeordnet ist.

5. Ruckhemmung nach Anspruch 4,
dadurch gekennzeichnet,
daß das Zwischenstück (3') einstückig mit dem Formteil (3) ausgeführt ist.

6. Ruckhemmung nach Anspruch 4 oder 5,
dadurch gekennzeichnet,
daß zwischen dem Formteil (3) und dem dem Kopf (6) der Spindel (4) entgegenliegenden Anschlag oder Verschlußstopfen (8), sowie zwischen dem Zwischenstück (3') und der Druckfeder (9) jeweils zwischen Beilagscheiben (11, 12, 14, 15) angeordnete Kugellager (10, 13) eingelegt sind.

7. Ruckhemmung nach Anspruch 6,
dadurch gekennzeichnet,
daß das Gehäuse (2) mit den Anschlägen, bzw. Verschlußstopfen (7, 8) und die Druckfeder (9) so dimensioniert sind, daß die weiteren Elemente, nämlich das Formteil (3), das Zwischenstück (3') und die Kugellager (10, 13) mit den Beilagscheiben (11, 12, 14, 15) in der Ruhestellung aneinanderliegen.
